# EUROPÄISCHE PATENTSCHRIFT

(11) **EP 1 165 316 B1**
(45) Veröffentlichungstag und Bekanntmachung des Hinweises auf die Patenterteilung: **11.08.2004**
(21) Anmeldenummer: 00907577.1
(22) Anmeldetag: 17.02.2000
(51) Int. Cl.: B32B 27/08, F25D 23/02, B29C 69/00

(54) **VERBUNDSCHICHPLATTE ODER-FOLIE**
COMPOSITE LAYERED SHEET OR FILM
PLAQUE OU FEUILLE STRATIFIEE COMPOSITE

(30) Priorität: 27.02.1999 DE 19908616
(43) Veröffentlichungstag der Anmeldung: 02.01.2002
(73) Patentinhaber: BASF AKTIENGESELLSCHAFT, 67056 Ludwigshafen (DE)
(72) Erfinder: RENNER, Hans-Jürgen, D-67141 Neuhofen (DE); WAGNER, Daniel, D-67098 Bad Dürkheim (DE)
(86) Internationale Anmeldenummer: PCT/EP2000/001292
(87) Internationale Veröffentlichungsnummer: WO 2000/051813

(56) Entgegenhaltungen:
- EP-A- 0 533 388
- EP-A- 0 644 035
- WO-A-98/34077
- DE-A- 19 517 069
- DE-A- 19 712 140
- US-A- 4 491 598
- US-A- 5 236 758
- DATABASE WPI Section Ch, Week 198742 Derwent Publications Ltd., London, GB; Class A14, AN 1987-295804 XP002140546 & JP 62 207777 A (TOPPAN PRINTING CO LTD), 12. September 1987 (1987-09-12)

## Beschreibung

Die Erfindung betrifft eine Verbundschichtplatte oder -folie aus Thermoplasten oder Thermoplastmischungen, Verfahren zu ihrer Herstellung, sowie daraus erhältliche wärmeisolierende Formkörper und Verfahren zur Herstellung von wäremisolierenden Formkörpern.

Wärmeisolierende Formkörper, wie Kühlschrankgehäuse oder Türen, werden üblicherweise aus einem Kunststoffinnenteil und einem lackierten Stahlblech als Außenteil hergestellt.

Bei den Kühlgeräteherstellern verstärken sich seit geraumer zeit immer mehr die Bestrebungen hin zu neuen Design-Möglichkeiten. Während jahrzehntelang fast ausschließlich weiße Geräte in rechteckiger Formgebung gefertigt wurden, sollen nun Geräte in einer bisher unbekannten Designvielfalt produziert werden. Bei zukünftigen Modellen werden rundliche, geschwungene Konturen und Wölbungen angestrebt, wobei auch unterschiedliche Oberflächenstrukturen und viele bunte Farben gefragt sind. Um dementsprechend kleine Serien von z.B. 500 bis 2000 Stück auflegen zu können, ist eine sehr flexible Produktionsmöglichkeit erforderlich.

Eine derart flexible Fertigung von Türaußenseiten (und auch Außengehäusen) in komplexer Formgebung bei gleichzeitiger Variation von Oberflächenstruktur und Farbe ist mit Stahlblech wirtschaftlich nicht realisierbar. Hier bieten sich thermoplastische Kunststoffe in idealer Weise an, da sie mit verschiedenen Verarbeitungsverfahren (Spritzgießen, Blasformen und Thermoformen) in nahezu beliebige Form gebracht werden können.

Neuere Verfahren zur Herstellung von Kühlschranktüren aus Kunststoffinnen- und -außenteilen sind beispielsweise aus US 5,507,999, US 5,533,311, WO 96/25287 und EP-A 0 520 508 bekannt. Für die Innen- und Außenteile werden hierfür nicht näher spezifizierte Thermoplaste, wie glasklares oder schlagzähes Polystyrol, ABS, Polypropylen oder Polycarbonat, genannt.

Für die Innenverkleidungen von Kühlgeräten werden seit vielen Jahren vorzugsweise Halbzeuge aus spannungsrißbeständigem, schlagfestem Polystyrol eingesetzt, die teils mit einer coextrudierten Glanzschicht ausgerüstet sind.

An die Außenverkleidung von Kühlschranktüren werden nun wesentlich komplexere Anforderungen gestellt. Dem Trend zu flexiblerer Produktdifferenzierung durch Design, Farbgestaltung und Oberflächenstruktur kann bereits heute durch den Einsatz verschiedendster Kunststoffe und darauf abgestimmter Verarbeitungsverfahren Rechnung getragen werden. Darüber hinaus sind gute Chemikalienbeständigkeit, Kratzfestigkeit und eine hohe UVund Lichtbeständigkeit der Einfärbung wichtige Gebrauchseigenschaften, die eine Außenverkleidung von Kühlgeräten erfüllen muß.

Bei aller Begeisterung über die geradezu unbegrenzte Designvielfalt und Kosteneffizienz, die der Einsatz von thermoplastischen Werkstoffen anstelle der konventionellen, lackierten Metallverkleidung bei der Kühlmöbelfertigung ermöglichen wird, sollte aber auch bedacht werden, daß innovative Kühlschrank-Konzepte der Energieeinsparung höchste Priorität einräumen müssen.

Im Unterschied zu Metallen enthalten Kunststoffe bekanntlich einen größeren Anteil an freiem Volumen, der es niedermolekularen Verbindungen wie Gasen ermöglicht unter Anwendung einer treibenden Kraft viel leichter und schneller durch sie hindurchzuwandern.

Durch die Anordnung im Kühlschrank im Betriebszustand, mit einer kalten Innenseite im Kühlraum und einer warmen Außenseite und bei unterschiedlicher Luftfeuchte erfolgt der Wasserdampfdruckausgleich in Richtung des Gefälles von Temperatur und Wasserdampfteildruck. Bei einer unzureichenden Diffusionsbarriere ist eine Anreicherung von Feuchtigkeit im PUR-Hartschaumstoff besonders im Bereich des Inliners zu erwarten, was zu gravierend schlechteren Isoliereigenschaften und damit erhöhtem Energieverbrauch führen kann. Exemplarische Untersuchungen der Feuchteaufnahme von Kühlmöbeln, die über einen längeren Zeitraum in einem Klimaraum gelagert wurden, und Zellgasmessungen stützen diese Annahme.

Aufgabe der vorliegenden Erfindung war es daher, eine Verbundschichtplatte oder -folie bereitzustellen, die die vorgenannten Nachteile nicht aufweist und sich zur Herstellung von wärmeisolierenden Formkörpern eignet. Die Verbundschichtplatten sollten sich insbesondere für die Außenverkleidung eignen und neben den optischen Ansprüchen auch der Forderung nach reduzierter Wasserdampfdurchlässigkeit entsprechen.

Die erfindungsgemäße Verbundschichtplatte oder -folie aus Thermoplasten oder Thermoplastmischungen enthält mindestens eine Substratschicht mit einer Wasserdampfdurchlässigkeit von maximal 5,0 g/m² pro Tag, gemessen unter Standardbedingungen (DIN 53122) und bezogen auf eine Schichtdicke von 0,1 mm.

Bevorzugt weist die Substratschicht eine Wasserdampfdurchlässigkeit im Bereich von 0,5 bis 4 g/m² pro Tag auf.

Die Substratschicht kann aus einer oder mehreren Schichten aus den gleichen oder verschiedenen Materialien bestehen. Als tiefziehfähige Thermoplasten für die Substratschicht eignen sich alle Kunststoffe, die sich ohne Zersetzung thermoplastisch verformen lassen. Bevorzugt werden glasklares Polystyrol (GPPS), schlagzäh modifiziertes Polystyrol (HIPS), Styrolcopolymere, wie Styrol-Butadien-Blockcopolymere, ASA, SAN, ABS, Polyolefine, wie Polyethylen oder Polypropylen, Acrylate oder Methacrylate, wie PMMA, Polycarbonate (PC) oder Mischungen davon, insbesondere Polystyrol/Polyethylenblends, verwendet.

Als funktionale Substratschicht mit vergleichsweise guter Wasserdampfbarriere wird besonders bevorzugt ein Blend aus Polyethylen und schlagfestem Polystyrol (Styroblend® WS 2776; Hersteller: BASF) eingesetzt, der mit 3 g pro m² und Tag - unter Standardbedingungen (Gefälle der relativen Feuchte von 85 % auf 0 %) gemessen und auf eine Schichtdicke von 0,1 mm bezogen eine hinreichende Sperrwirkung gewährleistet.

Die Verbundschichtplatte oder -folie besteht aus der oben genannten Substratschicht, auf die eine Farbträgerschicht und eine Glanzdeckschicht aufgebracht sind. Gegebenenfalls kann sich zwischen Substrat- und Farbträgerschicht eine Haftvermittlerschicht befinden.

Die Farbträgerschicht besteht aus einem Styrolpolymeren, wie schlagfestem Polystyrol oder Styrolcopolymeren, wie ASA, SAN oder ABS. Sie ist vorzugsweise UV-lichtstabil.

Die Glanzdeckschicht besteht aus einem Polyacrylat oder Polymethacrylat wie PMMA oder Polycarbonat (PC).

Als Haftvermittlerschicht können auch durch polare Gruppen modifizierte Polymere, wie durch Maleinsäureanhydrid gepfropftes Polystyrol, verwendet werden.

In der Regel verwendet man eine funktionelle Deckschicht (Veredelungsschicht), das heißt, die Deckschicht weist einen höheren Glanz, Farbigkeit, Spannungsrißbeständigkeit, Beständigkeit gegen Chemikalien und Umwelteinflüsse oder eine andere Oberflächenstruktur als die anderen Schichten auf.

Die Dicke der Substratschicht liegt im allgemeinen im Bereich von 0,1 bis 50 mm, bevorzugt 1 bis 10 mm. Die Dicken der Haftvermittlerschicht und der Glanzdeckschicht liegen jeweils im Bereich von 0,01 bis 1 mm, bevorzugt im Bereich von 0,05 bis 0,5 mm. Die Dicke der Farbträgerschicht liegt im allgemeinen im Bereich von 0,1 bis 10 mm.

Sowohl die Deckschicht, die Haftvermittler- und Farbträgerschicht, als auch die Substratschicht kann die in thermoplastischen Formmassen gebräuchlichen Hilfsstoffe in üblichen Mengen enthalten. Hierzu gehören beispielsweise: Antiblockmittel, Trennmittel, Stabilisatoren, Antistatika, leitfähige Zusätze, Flammschutzmittel, Farbmittel, Flexibilisatoren, Weichmacher, Haftvermittler, Füllstoffe, Verstärkungsmittel, Treibmittel oder Gleitmittel.

Als Gleitmittel eignen sich die für Kunststoffe gebräuchlichen Gleitmittel, wie Metallseifen, Parffinwachse, wachsartige Polymere, höhere Fettalkohole und Fettsäureester oder -amide oder Silikone. Bevorzugt werden Stearinsäure oder Stearate, wie Calcium- oder Zinkstearat, verwendet. In der Regel beträgt der Anteil des Gleitmittels 0,01 bis 10 Gew.-%, bevorzugt 0,1 bis 1 Gew.-%, bezogen auf die gesamte Deckschicht.

Die Verbundschichtplatten oder -folien können beispielsweise durch Coextrusion der Thermoplasten oder der Thermoplastmischungen für die einzelnen Schichten und/oder durch Laminieren der Schichten auf die Substratschicht hergestellt werden. Beispielsweise kann zur Oberflächenveredlung die Glanzdeckschicht coextrudiert oder als Witterungsschutzfolie (optional mit Dekordruck) auf die Substratschicht kaschiert werden.

Die erfindungsgemäßen Verbundschichtplatten eignen sich zur Herstellung von wärmeisolierenden Formkörpern. Zwei gleiche oder verschiedene Verbundschichtplatten oder -folien können hierzu in getrennten oder mittels dem Twin-Sheet-Verfahren in einem Arbeitsschritt thermoformt und verschweißt werden. Die Verbundschichtplatten können aber auch nur für die Außenverkleidung, beispielsweise von Kühlgeräte-Chassis-Elementen. verwendet werden.

Als wärmeisolierende Formkörper können beispielsweise Transportkisten, Wärmespeicher oder Kühl- oder Gefriergeräte oder Geräteteile, insbesondere Kühlschranktüren, hergestellt werden.

Zu Fertigung einer Vollkunststoff-Kühlgerätetür eignet sich beispielsweise das sogenannten Doppelstreckzieh-Verfahren (auch Twinsheet Thermoformverfahren). Unter Twinsheet Thermoformverfahren versteht man das Thermoformen zweier übereinander, flächig parallel, angeordneter Halbzeuge, in der Art, daß diese mit verschiedenen Formwerkzeugen (obere und untere Werkzeughälfte) umgeformt und gleichzeitig zu einem Fertigteil (Hohlkörper) verschweißt werden. Darüber hinaus gibt es auch die Möglichkeit des getrennten Thermoformens von Außen- und Innentür und deren nachträgliche Verbindung, z.B durch Schweißen, Kleben oder Schrauben.

Der Vorteil des Twinsheet Thermoformens ist, daß zwei Halbzeuge in einer Wärme thermogeformt und paßgenau zu einem Hohlkörper verschweißt werden können. Die dabei verwendeten Halbzeuge können aus unterschiedlichen Thermoplasten bestehen oder coextrudiert sein, sofern sie sich verschweißen lassen. Die Halbzeuge können unterschiedliche Oberflächenstrukturen, verschiedene Farben oder Halbzeugdicken aufweisen. Da das Thermoformen bei allen Kühlschrankherstellern durchgeführt wird, sind Thermoformmaschinen und -werkzeuge sowie Nachfolgeeinrichtungen vorhanden. Positive Ergebnisse dieser Untersuchungen könnten damit direkt in die Praxis übertragen werden.

Das Twinsheet Thermoformverfahren wird derzeit in zwei Verfahrensvarianten betrieben. Die einfachere Variante ist, die zwei Halbzeuge in einem Twinsheet Spannrahmen übereinander einzuspannen, die Halbzeuge einseitig aufzuheizen, danach das doppelseitige Werkzeug gegen die Halbzeuge zu fahren, zu thermoformen und gleichzeitig am Umfang zu verschweißen. Das Innere des Formteils ist vor und nach dem Verschweißen nicht zugänglich. Diese Verfahrensvariante ist auch auf den handelsüblichen Thermoformmaschinen durchführbar. Zusätzlich wird nur ein Twinsheet Spannrahmen benötigt, der zwischen den normalen Spannrahmen eingelegt wird, außerdem sind im Maschinenablauf kleinere Änderungen notwendig, um Stützluft zwischen die Halbzeuge blasen zu können, und die Vakuumleitung muß für beide Werkzeughälften aufgetrennt werden. Der Thermoformvorgang läuft wie üblich ab, nur die Kühlung des Formteils kann nicht mehr von außen über die Kühlgebläse erfolgen.

Die aufwendigere Verfahrensvariante ist, die Halbzeuge in zwei getrennten Spannrahmen aufzuheizen und in die zwei gegenüberliegenden Werkzeughälften zu thermoformen. Danach sind die zwei thermogeformten Halbschalen noch offen und es können Einlegeteile in die Halbschalen eingelegt werden. Durch Zusammenfahren des Werkzeugs erfolgt das Verschweißen der Halbschalen. Bei dieser Verfahrensvariante kann bei Bedarf die Thermoformmaschine durch eine dritte IR-Strahlerheizung und einen zweiten, beweglichen Spannrahmen ergänzt werden. Die notwendigen Kräfte zum Druckluftformen, Verschweißen und Abquetschen des Formteils sollten über die Thermoformmaschine aufgebracht werden. Außerdem sollte der Oberstempel als zweiter Maschinentisch ausgelegt sein, um eine präzise Führung der Werkzeughälften zu gewährleisten.

Thermoformen nach dem Negativverfahren bedeutet immer, daß die Formteilaußenseite an der Werkzeugwand anliegt und diese abformt. Dadurch ergeben sich Probleme bei glatten, glänzenden Oberflächen, da sich jede Inhomogenität abbildet. Mit besonderen Halbzeugoberflächen oder mit Strukturen auf der Werkzeugoberfläche können ansprechende Formteiloberflächen thermogeformt werden.

In das Formteilinnere oder in die Schweißnaht können auch Einlegeteile eingeformt werden. Um ein wirtschaftliches Twinsheet Thermoformen zu erreichen, ist das randlose Abquetschen des Formteils aus dem Spannrand notwendig.

Für die optimale Wärmedämmung können die Türen ausgeschäumt werden oder Einlegeteile, wie Vakuumpaneele, zum Einsatz kommen.

Beim Twinsheet Thermoformverfahren wird die Verschweißung bereits bei der Formung der Halbschalen durchgeführt und erspart so den separaten Arbeitsvorgang des Schweißens. Die getrennte Thermoformung von zwei Halbschalen hat den Vorteil, daß positiv geformt werden kann, wodurch die Sichtseiten nicht im Werkzeugkontakt sind. Damit kann eine optimale Oberflächenqualität bei hoher Produktionssicherheit erzielt werden. Eine Wanddickensteuerung durch Vorblasen oder Oberstempel ist hier möglich, was eine bessere wanddickenverteilung und die Ausformung schwieriger Geometrien ermöglicht. Weiterhin ist vorteilhaft, daß weniger Abfall entsteht (Spannrand) und daß Einlegeteile ohne räumliche Beengung eingebracht werden können.

Für die Schweißung können verschiedene Verfahren eingesetzt werden, die ihre spezifischen Vor- und Nachteile aufweisen.

**Tabelle 1:**

| Vergleich von Ultraschall- und Vibrationsschweißverfahren | | | | |
|---|---|---|---|---|
| | Ultraschallschweißverfahren | | Vibrationsschweißverfahren | |
| Parameterbereiche | Amplitude (= halbe Schwingweite) | 15 - 40 µm | Amplitude (100 Hz) | 1,2 - 3,0 mm |
| | spezifischer Schweißdruck | 0,5 - 2 N/mm² | Amplitude (250 Hz) | 0,6 - 0,8 mm |
| | Schweißzeit | 0,1 - 1,0 s | spezifischer Schweißdruck | 0,8 - 3,0 N/mm² |
| | Kühl-/Haltezeit | 0,3 - 2,0 s | Schweißzeit (Reibzeit) | 3 - 8 s |
| | Abschmelzweg | 0,3 - 1,5 mm | Kühl-/Haltezeit | ca. 5 s |
| | | | Abschmelzweg | 0,8 - 1,5 mm |
| Schweißnahtfestigkeit | PS-HI / PS-HI | 16 N/mm² | PS-HI / PS-HI | 18 N/mm² |
| (Maximalwerte) | PS-HI / ABS | 16 N/mm² | PS-HI / ABS | 22 N/mm² |
| | ABS / ABS | 31 N/mm² | ABS / ABS | 36 N/mm² |

**Tabelle 2:**

| Parameterbereiche für das Heizelementschweißen von Polystyrol und Styrolcopolymeren | | | | |
|---|---|---|---|---|
| Schweißverfahren | Wärmekontakt | | Hochtemperatur | Strahlung |
| Heizelementtemperatur, °C | 220 - 270 | | 350 - 420 | 300 - 450 |
| Erwärmzeiten, s | 10 - 25 | | 4 - 8 | 10 - 20 |
| spezif. Fügedruck, N /mm² | | 0,2 - 0,6 | | |
| Kühl-/Haltezeit, s | 10 - 20 | | 6 - 12 | 10 - 20 |
| Abschmelzweg, mm | | 0.8 - 1,5 | | |

Mit dem Heizelementschweißverfahren werden hohe Schweißnahtfestigkeiten erreicht (Standard-Wärmekontakt-Verfahren, Prüfkörper-Werte) :

| | |
|---|---|
| PS-HI / PS-HI | 20 N/mm² |
| PS-HI / ABS | 20 N/mm² |
| ABS / ABS | 36 N/mm² |

Das Regenerat, das sowohl bei der Coextrusion als auch nach dem Thermoformen als Randbeschnitt zwangsläufig anfällt, kann wiederverwertet werden. Bei entsprechender Schichtdickenverteilung weisen die anfallenden Regenerate eine sehr gute Mechanik auf und können bei der Verbundtafelherstellung als separate Mahlgutschicht ohne Qualitätseinbußen wieder eingesetzt werden.

### Beispiele für Verbundschichtplatten

### Beispiel 1

Es wurde eine coextrudierte Verbundschichtplatte folgender Zusammensetzung und Schichtdicke hergestellt:
Substratschicht: Polystyrol/Polyethylen Blend mit hoher Spannungsrißbeständigkeit und niedriger Wasserdampfpermeabilität, mit einer Schmelzevolumenrate MVR 200/5 von 4 cm³/10 min, einem Zug-E-Modul von 1200 MPa und einer Streckspannung von 27 MPa (Styroblend® WS 2776 der BASF AG)
Schichtdicke: 0,8 mm
Haftvermittlerschicht: Schlagfestes Polystyrol mit einer Schmelzevolumenrate MVR 200/5 von 7,5, einem Zug-E-Modul von 1400 MPa und einer Streckspannung von 17 MPa (Polystyrol 2714 der BASF AG)
Schichtdicke: 0,1 mm
Farbträgerschicht: Acrylnitril/Styrol/Acrylester-Polymer (ASA) mit einer Schmelzevolumenrate MVR 200/21,6 von 20 (Luran® S KR 2859 eingefärbt der BASF AG)
Schichtdicke: 0,9 mm
Glanzdeckschicht: Poly(methylmethacrylat), Lucryl® G 66 glasklar der BASF
Schichtdicke: 0,125 mm

### Beispiel 2

Es wurde eine Verbundschichtplatte folgender Zusammensetzung und Schichtdicke extrusionskaschiert:
Substratschicht: Polystyrol/Polyethylen Blend mit hoher Spannungsrißbeständigkeit und niedriger Wasserdampfpermeabilität, mit einer Schmelzevolumenrate MVR 200/5 von 4 cm³/10 min, einem Zug-E-Modul von 1200 MPa und einer Streckspannung von 27 MPa (Styroblend® WS 2776 der BASF AG)
Schichtdicke: 1,0 mm
Farbträgerschicht: Schlagfestes Polystyrol mit einer Schmelzevolumenrate MVR 200/5 von 4, einem Zug-E-Modul von 1500 MPa und einer Streckspannung von 21 MPa (Polystyrol 2710 der BASF AG)
Schichtdicke 1,5 mm
Glanzdeckschicht: Acrylfolie transparent mit Haftvermittler
Schichtdicke: 0,125 mm

Aus den Verbundschichtplatten der Beispiele 1 und 2 wurde eine einbaufertige Modelltür für ein Gefrierfach im Twinsheet Verfahren auf einer handelsüblichen Thermoformmaschine thermogeformt.

Die Modelltür mit den Maßen 580 x 390 x 80 mm wies folgende Merkmale auf:
- eine 480 mm breite Griffmulde auf einer Längsseite,
- eine umlaufend geformte 3,5 mm breite und 3 mm tiefe Nut zur Aufnahme der elastischen Türdichtung,
- eine 40 mm tiefe Vertiefung mit Nocken zum Einhängen von Einsätzen, wie sie in Kühlschranktüren üblicherweise eingeformt werden. Diese Vertiefung sollte zur besseren Raumausnutzung senkrechte Wände nach innen aufweisen,
- die Außenfläche ist bombiert auszuführen,
- das Werkzeug ist mit beheizten, auswechselbaren Quetschkanten auszustattten. Damit soll ein zeitlich verzögertes Verschweißen der beiden thermogeformten Halbschalen und randloses Abquetschen des Formteils verbessert werden,
- um Oberflächenstrukturen der Werkzeugwand am Formteil abzubilden, sind Formluftdrücke von 6 bar vorzusehen,
- in das Formteil sollen Einlegeteile eingebracht werden, wie Schaumkörper oder Türbefestigungselemente.

Für die Twinsheet Versuche wurde eine Thermoformmaschine der Fa. Illig, Typ UA 100/4 g in Normalausstattung verwendet. Die Hubkraft des Maschinentisches und des Oberstempels beträgt je 10 kN.

Die Maschinensteuerung wurde dem geänderten Verfahrensablauf angepaßt. Dazu wurden zusätzliche Magnetventile eingebaut, um die Blasnadel, den Schieber der Griffmulde, die Werkzeugverriegelung und die Druckluft zu steuern.

Die Konstruktion des Werkzeugs war so ausgelegt, daß damit beide Twinsheet Thermoformverfahren durchgeführt und das Formteil mit Druckluft ausgeformt und später randlos abgequetscht werden können. Da die zur Verfügung stehende Thermoformmaschine die notwendigen Kräfte für das Abquetschen und die Druckluftformung nicht aufbringen konnte, wurde das dopppelseitige Twinsheet Werkzeug aus zwei Werkzeugen aufgebaut. Aus einem Stammwerkzeug mit Verriegelung, in das ein auswechselbares Formwerkzeug aus Aluminium eingebaut wurde. Die Verriegelung des Stammwerkzeugs wurde für eine Zuhaltekraft von 360 kN ausgelegt. Das temperierbare Formwerkzeug bestand aus zwei Hälften mit negativen Werkzeugkonturen. Beide Werkzeughälten waren mit elektrisch beheizbaren, auswechselbaren Quetschkanten ausgerüstet. Dazu eine bewegliche Blasnadel, die ins Formteil ragt, um mit Stützluft beim Aufheizen das Zusammenkleben der zwei Halbzeuge zu verhindern und das Ausformen mit Druckluft zu ermöglichen. Außerdem ein Werkzeugschieber zum Ausformen einer Griffmulde an der Längsseite der Kühlschranktür. Eine besonders schwierige Geometrie ist die umlaufende 40 mm tiefe Ausformung zur Aufnahme von Einschubteilen. Um einen möglichst großen Raumgewinn zu erhalten, wurden die Wände senkrecht gestaltet.

Nach Inbetriebnahme des Twinsheet Werkzeugs wurden Formteile nach der einfachen Verfahrensvariante thermogeformt. Der Verfahrensablauf ist dabei folgender: Aufheizen der Halbzeuge - Zusammenfahren des Werkzeugs - Anlegen des Vakuums - Ausformen mit Druckluft.

Die wichtigsten Kriterien bei der Beurteilung der Formteile waren die Qualität der Oberfläche, die Ausformung und die Schweißnahtfestigkeit. Die Oberflächenqualität und die Ausformung wurden visuell beurteilt.

## Patentansprüche

1. Verbundschichtplatte oder -folie aus Thermoplasten oder Thermoplastmischungen, enthaltend mindestens eine Substratschicht mit einer Wasserdampfdurchlässigkeit von maximal 5,0 g/m² pro Tag, gemessen unter Standardbedingungen (DIN 53122) und bezogen auf eine Schichtdicke von 0,1 mm, eine Farbträgerschicht aus einem Styrolpolymeren und eine Glanzdeckschicht aus einem Polyacrylat, Polymethacrylat oder Polycarbonat.

2. Verbundschichtplatte oder -folie nach Anspruch 1, **dadurch gekennzeichnet, daß** die Substratschicht eine Wasserdampfdurchlässigkeit im Bereich von 0,5 bis 4 g/m² pro Tag aufweist.

3. Verbundschichtplatte oder -folie nach den Ansprüchen 1 oder 2, **dadurch gekennzeichnet, daß** die Substratschicht aus einem Polystyrol/Polyethylenblend besteht.

4. verbundschichtplatte oder -folie nach einem der Ansprüche 1 bis 3, **dadurch gekennzeichnet, daß** sich zwischen der Substratschicht und der Farbträgerschicht eine Haftvermittlerschicht befindet.

5. Verbundschichtplatte oder -folie nach einem der Ansprüche 1 bis 4, **dadurch gekennzeichnet, daß** die Dicke der Substratschicht im Bereich von 0,1 bis 50 mm, die Dicke der Farbträgerschicht im Bereich von 0,1 bis 10 mm und die Dicken der Haftvermittlerschicht und der Glanzdeckschicht jeweils im Bereich von 0,01 bis 1 mm liegen.

6. Verbundschichtplatte oder -folie nach einem der Ansprüche 1 bis 5, **dadurch gekennzeichnet, daß** die Farbträgerschicht aus schlagfestem Polystyrol, ASA, SAN oder ABS besteht.

7. Verfahren zur Herstellung einer Verbundschichtplatte oder - folie gemäß einem der Ansprüche 1 bis 6 durch Coextrusion oder Laminieren.

8. Verfahren zur Herstellung von wärmeisolierenden Formkörpern, **dadurch gekennzeichnet, daß** man zwei gleiche oder verschiedene Verbundschichtplatten oder -folien gemäß den Ansprüchen 1 bis 6 in getrennten, oder mittels dem Twin-Sheet-Verfahren in einem Arbeitsschritt thermoformt und verschweißt.

9. Verwendung der Verbundschichtplatte oder -folie gemäß einem der Ansprüche 1 bis 6 zur Herstellung von Außenverkleidungen von Kühlgeräte-Elementen.

10. Wärmeisolierende Formköper, erhältlich aus ein oder mehreren Verbundschichtplatten oder -folien gemäß einem der Ansprüche 1 bis 6.

## Claims

1. A composite layered sheet or composite layered film made from thermoplastics or thermoplastic mixtures, comprising at least a substrate layer with a water-vapor permeability of not more than 5.0 g/m² per day, measured under standard conditions (DIN 53122) and based on a layer thickness of 0.1 mm, a coloring layer composed of a styrene polymer and an outer gloss layer composed of a polyacrylate, polymethacrylate or polycarbonate.

2. A composite layered sheet or composite layered film as claimed in claim 1, wherein the substrate layer has a water-vapor permeability of from 0.5 to 4 g/m² per day.

3. A composite layered sheet or composite layered film as claimed in claim 1 or 2, wherein the substrate layer is composed of a polystyrene/polyethylene blend.

4. A composite layered sheet or composite layered film as claimed in any one of claims 1 to 3, wherein there is a tie layer between the substrate layer and the coloring layer.

5. A composite layered sheet or composite layered film as claimed in any one of claims 1 to 4, wherein the thickness of the substrate layer is from 0.1 to 50 mm, the thickness of the coloring layer is from 0.1 to 10 mm and the thickness of the tie layer and of the outer gloss layer is in each case from 0.01 to 1 mm.

6. A composite layered sheet or composite layered film as claimed in any one of claims 1 to 5, wherein the coloring layer is composed of impact-modified polystyrene, ASA, SAN or ABS.

7. A process for producing a composite layered sheet or composite layered film as claimed in any one of claims 1 to 6 by coextrusion or lamination.

8. A process for producing thermally insulating moldings, which comprises thermoforming and welding two identical or different composite layered sheets or composite layered films as claimed in any of claims 1 to 6 in separate operations, or in a single operation using the twin-sheet process.

9. The use of the composite layered sheet or composite layered film as claimed in any one of claims 1 to 6 for producing outer panels for components of refrigeration equipment.

10. A thermally insulating molding obtainable from one or more composite layered sheets or composite layered films as claimed in any one of claims 1 to 6.

## Revendications

1. Plaque ou feuille stratifiée composite à base de thermoplastiques ou de mélanges de thermoplastiques, contenant au moins une couche de substrat présentant une perméabilité à la vapeur d'eau d'un maximum de 5,0 g/m² par jour, mesurée dans des conditions normales (DIN 53122) et ramenée à une épaisseur de couche de 0,1 mm, une couche de support de couleur à base d'un polymère de styrène et une couche de finition brillante à base d'un polyacrylate, d'un polyméthacrylate ou d'un polycarbonate.

2. Plaque ou feuille composite selon la revendication 1, **caractérisée en ce que** la couche de substrat présente une perméabilité à la vapeur d'eau de l'ordre de 0,5 à 4 g/m² par jour.

3. Plaque ou feuille composite selon la revendication 1 ou 2, **caractérisée en ce que** la couche de substrat est constituée d'un mélange de polystyrène / polyéthylène.

4. Plaque ou feuille composite selon l'une quelconque des revendications 1 à 3, **caractérisée en ce qu'**entre la couche de substrat et la couche de support de couleur se trouve une couche d'agent adhérisant.

5. Plaque ou feuille composite selon l'une quelconque des revendications 1 à 4, **caractérisée en ce que** l'épaisseur de la couche de substrat est de l'ordre de 0,1 à 50 mm, l'épaisseur de la couche de support de couleur est de l'ordre de 0,1 à 10 mm et les épaisseurs de la couche d'agent adhérisant et de la couche de finition brillante sont à chaque fois de l'ordre de 0,01 à 1 mm.

6. Plaque ou feuille composite selon l'une quelconque des revendications 1 à 5, **caractérisée en ce que** la couche de support de couleur est constituée de polystyrène résistant au choc, d'ASA, de SAN ou d'ABS.

7. Procédé de production d'une plaque ou feuille composite selon l'une quelconque des revendications 1 à 6 par coextrusion ou laminage.

8. Procédé de production de corps moulés à propriétés d'isolation thermique, **caractérisé en ce que** l'on procède au thermoformage et au soudage de deux plaques ou feuilles composites identiques ou différentes selon les revendications 1 à 6, dans des étapes séparées ou en une étape de travail au moyen du procédé "Twin-sheet".

9. Utilisation des plaques ou feuilles composites selon l'une quelconque des revendications 1 à 6 pour la production d'habillages extérieurs d'éléments d'appareils frigorifiques.

10. Corps moulés à propriétés d'isolation thermique, que l'on peut obtenir à partir d'une ou plusieurs plaques ou feuilles composites selon l'une quelconque des revendications 1 à 6.
